# EUROPEAN PATENT APPLICATION

(11) **EP 4 786 235 A1**
(43) Date of publication of application: **05.08.2026**
(21) Application number: 25188615.6
(22) Date of filing: 09.07.2025
(51) Int. Cl.: B60J 11/02, B60J 11/04

(54) **ALL-IN-ONE WEATHER PROTECTION SYSTEM FOR ANY VEHICLE**

(30) Priority: 31.01.2025 US 202563752338 P
(71) Applicant: Di Salvo, Marco Thomas, 42048 Rubiera (Reggio Emilia) (IT)
(72) Inventor: Di Salvo, Marco Thomas, 42048 Rubiera (Reggio Emilia) (IT)

(57) **Abstract**

It consists of a compact, multipurpose set of retractable awnings that can be extended to partially or fully cover your vehicle and offer protection from intense sunlight, hailstone, ice, snow, rain, the fall of pine needles, resin/sap, leaves, bird droppings and dust - in just one, easy-to-use solution.It is a lightweight set of protective awnings that can be mounted onto any vehicle, quickly and effortlessly wherever you might be - ultimately saving you both valuable time and offering peace of mind.The strong, streamline casing, housing the protective awnings, can be a permanent feature acting both as a roof rack and as an instantly-available, incorporated weather-protection system. The devices that can be mounted onto your vehicle (and removed, if desired) following a simple associated method - either by attaching them to the vehicle body directly via their own preinstalled fixture accessories (according to the type of vehicle) or attaching them onto existing vehicle accessories.

## Description

### Field of the Invention

The invention relates generally to a portable all-in-one weather protection system for any vehicle; A dual-function roof rack system

### Background

Currently there are a number of solutions on the market dedicated to protecting vehicles from a variety of weather conditions, in a manner of different ways. Where closed-cabin/cockpit vehicles are concerned, some solutions attempt to resolve the problem of exposure to excessive heat/sun radiation by covering only the windscreen / dashboard area (often from the inside - favouring a sort of greenhouse effect inside the vehicle), while leaving the rest of the vehicle exposed to direct sun radiation. Existing solutions that attach to the car roof and open out automatically to offer more comprehensive protection are, however, less stable in windy conditions and do occupy valuable roof space when mounted as a permanent feature. Similarly, where solutions to protect the vehicle from snow and ice are concerned, the vehicle owner can either turn to chemical products and hand-held instruments to physically remove ice, frost or snow, or use cumbersome and weighty means to cover the front and rear windows. While certain protection devices, readily available on the market, do offer protection against the unforgiving bombardment of hailstone, they do tend to be very cumbersome when stored and do require a rather lengthy installment procedure which may involve unfolding, positioning, hooking, strapping or even inflating. With regard to parking in the vicinity of, or under trees, the fall of debris (like leaves, pine needles, sap/resin or bird droppings), while some of these solutions might well offer some validity, their installation is either too lengthy, the protection they offer is only partial or they are totally impractical due to the space limits that parking lots often pose (and the amount of time available when the vehicle is being used for short errands). **Method/Process** - These solutions fail to meet the needs of the industry because, being separate devices, a vehicle owner who were to attempt to take all the necessary protection measures against all climatic conditions would require excessive storage space and incur excessive costs at the time of purchase. Furthermore, complex installation procedures for certain devices are not always practical due to limiting factors such as time and available parking space - some solutions that open out over the vehicle roof excessively invade the surrounding area and they can only be applied to a limited range of vehicles. Therefore, there currently exists a need in the industry for a permanent or temporary roof rack system that, within its casings, houses, resistant, UV-resistant, impermeable, washable, theft-proof and slash-proof, spring-loaded, retractable awnings that can be extended to cover your vehicle - allowing you to: leave your vehicle outside without having to worrying about scraping iced-over or snow-laden windscreens/windows; park in the sun without having to fight over that last shaded parking lot; avoid having to clean off fallen debris/substances or rush around in a frenzy to get ahead of that hailstorm.

### Description

It consists of a compact, multipurpose set of retractable awnings that can be extended to partially or fully cover your vehicle and offer protection from intense sunlight, hailstone, ice, snow, rain, the fall of pine needles, resin/sap, leaves, bird droppings and dust - in just one, easy-to-use solution. It is a lightweight set of protective awnings that can be mounted onto any vehicle, quickly and effortlessly wherever you might be - ultimately saving you both valuable time and offering peace of mind.

The strong, streamline casing, housing the protective awnings, can be a permanent feature acting both as a roof rack and as an instantly-available, incorporated weather-protection system.

The devices that can be mounted onto your vehicle (and removed, if desired) following a simple associated method - either by attaching them to the vehicle body directly via their own preinstalled fixture accessories (according to the type of vehicle) or attaching them onto existing vehicle accessories.

Disclosed is an all-in-one, permanent or semi-permanent roof rack with an incorporated, ready-to-use, weather protection system. It is made up of the following components:
- a set of retractable, spring-loaded awnings/covers that are housed on rollers in lightweight, modular aluminium casings whose overall length either matches or slightly exceeds the width of the vehicle. The anterior casing contains two hidden, spring-loaded awnings that lie parallel to each other and run the full length of the casing: the front edge has an opening which allows an awning to be pulled down and extend over the windscreen or just beyond the front of the vehicle; its internal edge has an opening that allows an awning to be pulled backwards over the central section of the vehicle's roof and connect directly to the internal edge of the rear awning casing. The outer edge of the latter has an opening that allows a hidden awning to extend over the rear window or just beyond the rear end of the vehicle.
- a set of accessory attachments that act as spacers, thus prevent the awnings from touching the vehicle body (especially where the angulation of the awning, when extended, would tend to draw it closer to the vehicle (i.e. In proximity of where the windscreen and rear window meet the roof).
- a pair of telescopic bars that can be extended across the width of the vehicle, acting as both spacers and anchors for the awning profile strip(s).
- permanent or removable attachment fixtures that act as anchors on various parts of the vehicle.
- the associated method is made up of the following steps: these components are mounted or slid onto existing, anterior and posterior roof rack crossbars, consequently lying parallel to each other, and extending across the entire width of the vehicle OR are mounted, using their own attachment system, independently of any vehicle accessory.
- The outer edge of each awning is attached, longitudinally, to a rubber-lined, aluminium profile strip which, when closed, is both streamline and weather-sealed while when open, provides stability and allows the awning to be fixed in position.

The device may also have one or more of the following:
- a series of retractable, non-stick, resistant, UV-resistant, slash-proof and impermeable awnings/shades, housed on spring-loaded rollers inside a light-weight, resistant aluminium or hardened plastic (or similar material) casing that can be either a single, one-piece unit (spanning the entire width of the vehicle with extra for overhang) or a number of snap or push-together (or hinged-jointed) modular units that align longitudinally (according to the type and width of vehicle). Each singular unit (or set of modular units) is strategically attached to (or mounted on) the exterior of the vehicle in such a way as to allow the complete and/or partial coverage of the vehicle's body/components/accessories/windows, etc. while still ensuring there is suitable clearance between the vehicle, itself, and the protective awning. With respect to the device, it should be further noted that the number of mountable, retractable-awning units necessary can vary according to the vehicle in question and, where need be, can be connected among themselves in order to ensure that the whole vehicle is offered the necessary protection (or mounted separately should only part of the vehicle need protecting). The aforementioned retractable units can either be stand-alone, independent units that have their own mounting, or attachment system incorporated (whether it be fixed, pivoted or rotatable - magnetic, suction, screw-on, clip, strap, rail, bar, track, bracket, clamp, bolt, hook-and-pile strip or hook, etc.) or can attach to, or be adapted to (but not limited to), ANY part of the vehicle itself or any preinstalled, permanent or removable accessories (including bars, handlebars, roof bars, crossbars, racks, baskets, external frames, gutters, brackets, platforms, fixed points, hooks, straps, adhesives, hook-and-pile straps, magnets, bolts, screws, clips, grips, raised rails, flush rails, fixed points, tracks, T-tracks snap-on devices or cargo boxes, racks, baskets, tent carriers, luggage carriers, wind panels). The device can also be incorporated into, and thus be an integral part of any existing roof accessory (at the manufacture stage) including, but not limited to, cargo boxes, racks, baskets, tent carriers, luggage carriers, wind panels The attachment system employed by the device (once the vehicle has been identified) can either be fully (or partially) removable or permanent in order to facilitate quick, easy and reliable installation and removal.
- a built-in or portable, rechargeable, electric-wind feature to rewind or apply extra tautness - this can have either directional buttons or be controlled remotely OR can have an incorporated manual-wind feature with its own, hide-away, or removable, pivoted handle that can fold back on itself and lie flush either for storage purposes or as a locking device to maintain tautness - located or housed at the end(s) of the casing, this can be used to tighten the awnings whenever the built-in, spring-loaded mechanism does not offer sufficient tautness.
- an in-built, theft-proof locking system to prevent the device(s) from being unwantedly removed or stolen.
- strategically-placed, in-built mechanical features to ensure that the device(s) sits firmly and stably in position when mounted on existing vehicle accessories.
- a set of shaped, plastic or hardened-rubber adapter blocks ensures the device can be tightly and securely mounted onto ANY profile of existing roof rack crossbars.
- adjustable angulation brackets can be implemented so as to ensure the upper-most, weight-bearing surfaces of the devices align perfectly with each other, thus offering even support when acting as a roof rack.
- a set of strong, magnetic or suction devices that can be easily attached to any part of the vehicle in order to anchor the external profile strip of the awnings and hold them in position
- pivoted or ball-socket attachments to allow the device to swing round and align in parallel to the length of the vehicle where either lateral protection is deemed necessary and/or to allow the awning to be drawn out laterally and suspended, for use as a sit-under canopy while the vehicle is stationary (e.g. while camping).
- the lateral edges of each retractable awning can be lined with hooks, hoops or hook-and-pile fastening strips (like velcro) or a magnetic material so as to allow the awnings in the shorter, modular units to join together when extended and to be pulled down (outermost edge of awning) laterally and attached to the side of the vehicle (for stabilty in adverse weather conditions, or to attach any side protection accessories) and, in the case of use as a side canopy, to allow the attachment of hang-down mosquito nets or curtains, for privacy, e.g. for use as a a beach changing room or an emergency toilet.
- accessories: folding-extendable awning arms with mechanical or magnetic attachments; mosquito nets and curtains; a sturdy carry/storage case; non-stick treatment spray
- another feature, to facilitate the loading and unloading of longer, heavier objects either from the rear or front of the vehicle, might be the addition of an extra roller located at the top of the awning casings (in the single, full-length casings) - once the load is in position, the roller can be 'dropped' down into the casing by means of a lever located at each end of the casing, thus allowing the load to rest on the rubber strips that run along the entire length of the upper-most surface of the casing - preventing the load from rolling off or slipping; when necessary, the above-mentioned rollers are raised again (by means of the levers) in order to allow the load to roll off easily
- the awning profile strip can have a pull-down string or cord (or releasable hook feature) to make it easier to extend the awning, especially when access to the awning is more difficult (e.g. when the awning casing is positioned over a truck windshield);
- the upper, weight-bearing surface has previously-machined, threaded (and non-threaded) holes to accommodate any eventual accessories such as (but not limited to) bike and ski racks, cargo boxes, platforms, baskets, etc.)

The disclosed device is unique when compared with other known devices and solutions because **it provides, not only:**
- an all-in-one weather protection system by which vehicle owners (of all types of vehicles) can protect their vehicle from a variety of conditions, whether directly connected to, or induced by, the climate or other sources; and
- boasts the advantage of being a fully-functional roof rack that can either be permanent or temporary; but
- it can be left in position (awnings closed) while the vehicle is in motion, ready for immediate use, even permitting the vehicle to simultaneously bear a roof load;
- it can be employed quickly and easily wherever the vehicle may be without being limited by the surroundings;
- it is not only strong and sturdy, but also compact and lightweight;
- it can be adapted to, and mounted on ANY vehicle;
- it can be mounted on a vehicle, and used, even in the presence of large roof accessories like racks, carriers, boxes and platforms;
- once mounted, it can be left in place (even the temporary version) as it is streamline and weatherproof;
- being a hide-away device in a protective casing it can be built into, during the manufacturing phase, existing accessories, thus becoming an integral part of the vehicle, and;
- is immediately ready for use as soon as you park - offering no fuss, just piece of mind.

Similarly, the associated **method is unique** in that it:
- is quick and easy to install or remove (whether for the first time as a permanent feature or for temporary, one-time use;
- via the prior installation of permanent, pedestrian-safe accessories it is swiftly employed;
- is theft proof, washable, resistant, UV-resistant, vandal/slash proof;
- with the suitable mounting accessories (determined at the time of purchase), it is easily mounted onto any vehicle, and;
- being an all-in-one weather protection device and, at the same time, a roof carrying accessory, it offers vehicle owners the chance to save money on, what is, a more efficient solution on the whole.

Similarly, the disclosed **method is unique** when compared with other known processes and solutions in that it:
- is either free-standing (with its own compatible, mounting accessories) or;
- mounted onto existing vehicle accessories;
- it has the option of being stored on the outside of the vehicle at all times, ready for use; and once in place, the tautness can be regulated to offer greater resistance according to the weather conditions.

The disclosed device **is superior to other known weather-protection devices or solutions** because it is an all-in-one, permanent or semi-permanent roof rack with an incorporated, ready-to-use, weather protection system. More specifically, the device is unique in that it is structurally different from other known devices due to the presence of:
- a set of two (for cars) lightweight roof crossbars (or modular aluminium casings - or other material with similar properties) containing hidden retractable awnings/covers that are housed on spring-loaded rollers, thus avoiding the need for folding and unfolding cumbersome covers or sheets;
- the anterior casing contains two such awnings mounted on spring-loaded rollers that lie parallel to each other and run the full length of the casing, that spans the entire width of the vehicle: a single, one-piece version (available in varying lengths - according to the vehicle) has two possible structures (A) the stand-alone version has its own adjustable mounting brackets (as with all types of roof crossbars) that allow it to be mounted onto any vehicle body (or vehicle accessories) : the front and internal, longitudinal edges reveal a flush, aerodynamic, weather-sealed and vibration-proof, rubber-lined aluminium profile strip that is attached to the outer edge of each awning. Once open, the front awning is pulled out through the previously-concealed slot and extended just beyond the front of the vehicle or just past the windshield where it is then anchored to the body of the vehicle - via the above-mentioned profile strip - either to preinstalled, permanent anchors, or removable anchors. Similarly, the profile strip that lies along the internal edge of the front unit allows the awning(s) to be pulled backwards and extend over the central section of the vehicle's roof and connect directly to the internal edge of the rear awning casing that lies parallel to the front casing unit
- the internal edge of the rear casing, that faces, and lies parallel to the anterior casing, contains a recess into which the profile of the inner awning of the anterior casing is locked in place via spring-loaded hooks; the back, or outer edge, of the rear casing has another opening, identical to the ones in the front unit, that allows a hidden awning to extend backwards over the rear of the vehicle - either completely covering the rear end or just enough to cover the rear window;
- since they also act as a roof carrying device, the awning casings are streamline, aerodynamic and weatherproof and can be left on the outside of the vehicle as a permanent or semi-permanent feature whether or not they are employed as roof crossbars;
- the casings' roof attachments have integrated, adjustable angulation brackets to ensure that the upper-most, weight-bearing surfaces of the anterior and posterior units align perfectly with each other, thus offering even support when acting as a roof rack - the upper weight-bearing surface of each unit is lined with rubber strips for extra grip and protection;
- each unit has an anti-theft locking device consisting of lockable brackets situated on the underside of the casing (for the slide-on version which attaches to separate crossbars);
- clearance between the extended awnings and the body of the vehicle is guaranteed as the above-mentioned devices are mounted on supports (as is any standard roof rack system) and the gap is maintained constant, throughout the length of the vehicle, by means of strategically-placed spacers that consist of telescopic bars that open out to the width of the vehicle and in parallel to the awning casings - as temporary fixtures, these are attached magnetically, via suction pads or attached onto preinstalled, permanent attachments so that their implementation and removal are immediate and complication free. Key positions are where there are sudden, acute changes in the angulation of vehicle's body - namely in proximity of where the front windscreen and rear window meet the vehicle roof.(i.e. in the presence of hailstone or for heat dispersion in the case of intense heat), in which case their uppermost surface is lined with rubber strips so as to offer greater grip;
- each device (not the stand-alone version) is profiled to allow it to fit onto existing roof crossbars from the same manufacturer - where crossbars from other manufacturers are encountered, a set of preinstalled, hardened plastic or rubber profile adapter blocks (purchased according to the profile of the crossbar) allow a tight and secure, vibration-free fit onto ANY profile of existing roof crossbars;
- otherwise the device can be stand-alone, without any such profile, as it comes with its own mounting accessories to fit any vehicle;
- a gap between the awning and the vehicle (maintained with the aid of strategically-placed spacers and anchor devices) guarantees heat dispersion, in the case of sun radiation, or a protective cushioned-effect layer of air, in the case of hailstone;
- the devices are connectable among themselves - more devices can be located on the roof of a vehicle as its length requires, as can the number of smaller modular units, as the width of the vehicle requires;
- its rewind feature, whether manual or electric, provides greater stability in windy weather, and;
- for commercial vehicles, where frequent loading and unloading of longer, heavier loads is necessary, there is also a central roller that is lowered and raised by levers (lateral load stoppers prevent the load from slipping off sideways);
- there is a single casing unit built to fit a specific vehicle

Furthermore, the **process associated with the aforementioned device is likewise unique.** More specifically, the disclosed process owes its uniqueness to the fact that these devices **are mounted on ANY vehicle or vehicle part or existing accessories.** With regard to cars, they are dropped or slid onto the anterior and posterior roof rack crossbars, consequently lying parallel to each other, and extending across the entire width of the vehicle OR are mounted, using their own attachment system, independently of any vehicle accessory:
- the hinged model, consisting of two separate awning casings joined longitudinally by a central hinge is opened up to lie straight - in doing so the interlocking male-female insertions automatically line up to ensure the rollers act in unison - and then is slid or dropped onto either an existing crossbar (or its own purpose-made bar) and secured tightly in place using locking brackets on the underside of the casing;
- the shorter modular units (a set of three for a car) are slid onto either an existing crossbar (or its own, purpose-made, bar) and secured in place - once the male-female insertions have aligned and interlocked - by means of locking brackets;
- a set of telescopic bars acting as spacers, that prevent the awnings from touching the vehicle body, are lengthened and extended across the width of the vehicle, in proximity of where the windscreen and rear window meet the roof - in the case of longer roofs an extra spacer (or spacers) is placed centrally;
- the awnings are then pulled out and anchored (via their profiled strip) to, either permanent mounting accessories that have been strategically placed prior to use, or to removable temporary accessories that are positioned when necessary;
- for partial protection (i.e. of the anterior and rear windows) the front awning is quickly pulled out and anchored just below the windshield (the rear awning just below the rear window) to permanent anchoring clips that have been preinstalled onto the rim, or lip, of the hood and trunk lids - especially when a quick solution is needed; or
- the telescopic bars, with incorporated, spring-action, anchoring hooks are positioned on the hood or trunk via their incorporated, suction or magnetic pads, or via flat grips that are slotted onto the rim of the hood and trunk lid while open - once closed, the telescopic bar remains securely in place and can only be removed on opening the hood and trunk - this option is particularly useful when extending the awning fully to cover the whole vehicle, especially when the ends of the vehicle have an irregular surface that does not allow suitable adhesion for the magnetic or suction-based model.
- Similarly, where the shape of the front and rear ends of the vehicle renders anchorage more difficult, single-stem anchoring clips with rotational movement (to distance them from the vehicle body) are fitted via grips onto the rim of the hood and trunk lids - this option is particularly indicated for use with the single, full-length awning version; the gripped mounting brackets, at the base of the aforementioned clip stems, are either a permanent feature to which the stems are attached and detached as required, or mounted and removed together with the stems as a unique piece;
- the central awning is drawn backwards across the roof section from its anterior casing where it meets up with its own insert running along the internal edge of the rear casing - here, it is held securely in place by a set of quick-release, in-built jaw clips that clasp onto the awning profile; the profile is released by means of a release button located in the end block of the casing (releasing both the outer and innermost jaw clips) or in proximity of the jaw clip (depending on the model) - this is predetermined according to the width of the vehicle.

With regard to **motorbikes, quad bikes or PWC's (Personal Water Craft including JetSki's):** a single custom-built double awning device is mounted (according to the vehicle type and accessories present) onto the handlebars:
- the front awning is extended over the front of the vehicle where it is anchored to its strategically-placed jaw clips or bar; the rear awning is extended over the tank, seat and rear pannier or storage area, where it is anchored - the system of anchorage is decided prior to purchase, according to the type and model of vehicle, and the accessories present.
- In the presence of a windscreen that needs bridging, the awning casing comes fitted with its own set of stems that raise the unit above the windscreen, thus allowing complete, full-length, uninterrupted protection of the vehicle.
- alternatively, a single awning unit is positioned and anchored at the rear of the vehicle (whether to part of the vehicle body itself or to its accessories) using the appropriate mounting system. The awning is then drawn forward, over the seat and fuel tank and anchored either to the handlebars or to the front of the vehicle, using the appropriate mounting accessories.

### Drawings

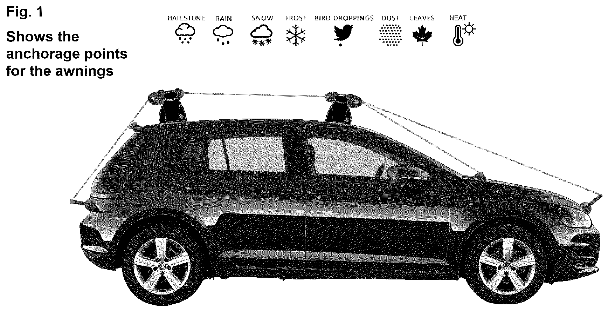

**[****Fig. 1****]** Shows a side view of the all-in-one weather protection device in position on the vehicle's roof crossbars which are either purpose-built - supplied with the device at the time of purchase - or preinstalled.
   The front housing unit contains two spring-loaded rollers onto which the awnings are mounted - the image shows the two positions in which the front awning can be anchored i.e. just below the windshield and at the front of the vehicle - ensuring that the awning extends just beyond the front end; over the middle roof section; and the rear window. Small, matching-coloured spacers, as can be seen just above the rear window, are a possible permanent feature that complements the vehicle's lines and colour scheme. There's also an indication of the atmospheric conditions that the awnings are able to counter.

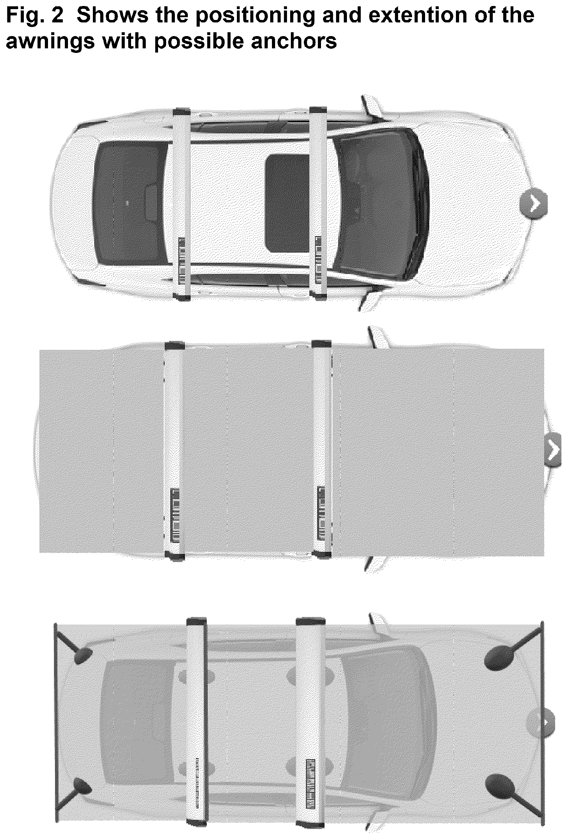

**[****FIG. 2****]** Offers an aerial view, showing the positioning and extension of the awnings.
   This image shows the awning set - consisting of a front housing unit containing two awnings and a rear housing unit containing just one awning.

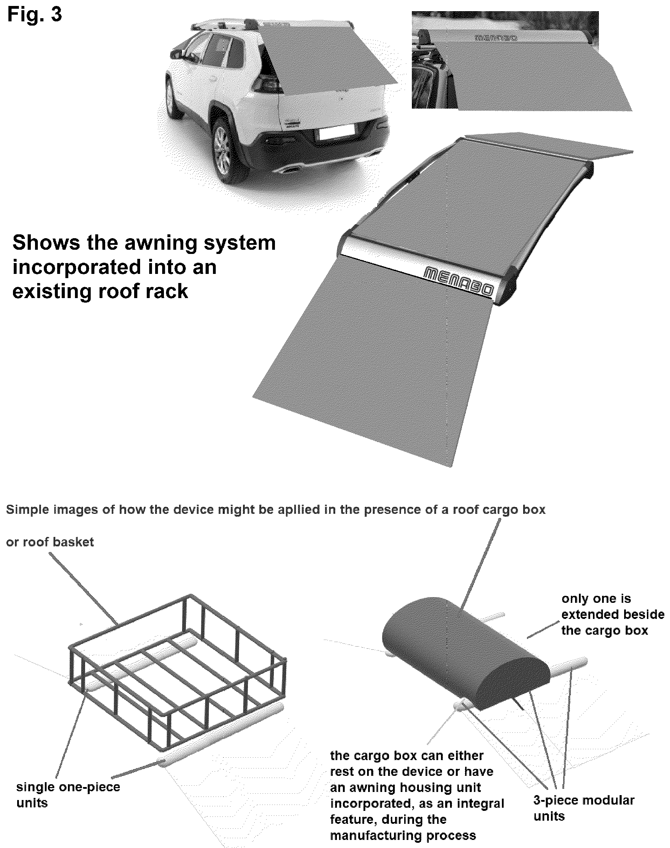

**[****FIG. 3****]** Shows an example of how the awning device can be incorporated into an existing roof rack accessory in the presence of a roof cargo box or roof basket, etc. The device can be incorporated into, and be an integral part of, existing accessories. In this particular case the device would remain a permanent feature and be readily available on any occasion; similarly, the front and rear awning housing set can be applied to existing racks, cages or any roof structures to become a permanent feature.

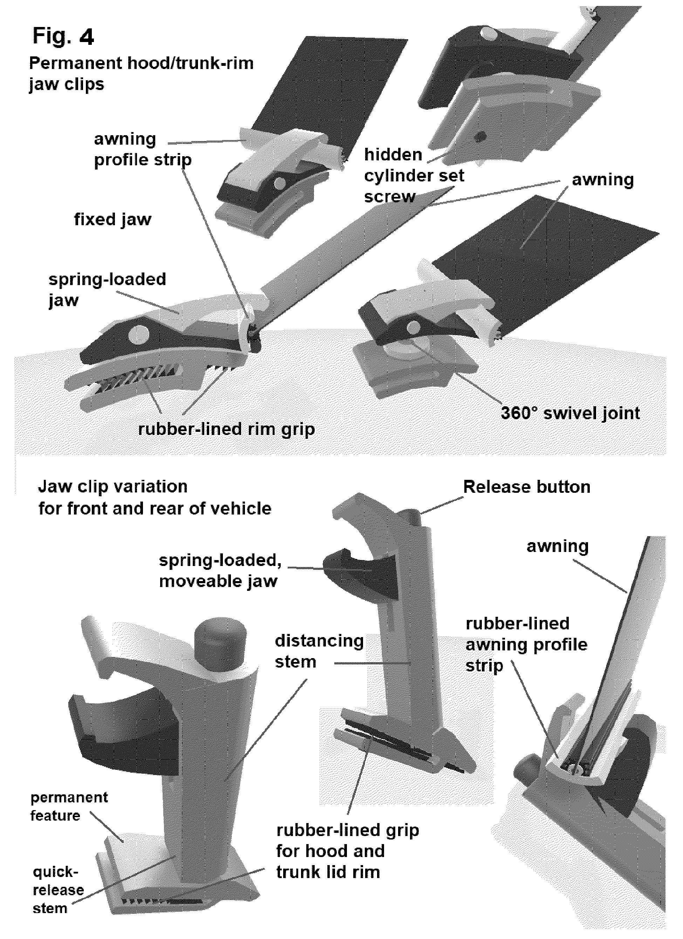

**[****FIG. 4****]** Illustrates a possible, permanent anchoring jaw clip that remains in place, once attached to the hood or trunk rim - the clips are rubber-lined for better grip and to avoid scratching the paintwork; are held in place by hidden cylinder set screws and can swivel to ensure the jaws align perfectly with the awning profile strip (swivel movement attained by pulling, turning, and releasing the upper clip vertically - falling and sitting in its new position via a spring;
   a possible, long-stem hood/trunk-rim jaw clip to anchor the awning to the front and rear of the vehicle - the long stem allows the awning the extend beyond the end of the vehicle and maintain the gap between the awning and vehicle body; the stem can be detachable from the base, which remains a permanent feature. In this option, the upper jaw is fixed while the lower jaw is spring-loaded - a release button is pressed to counter the spring force and open the jaw.

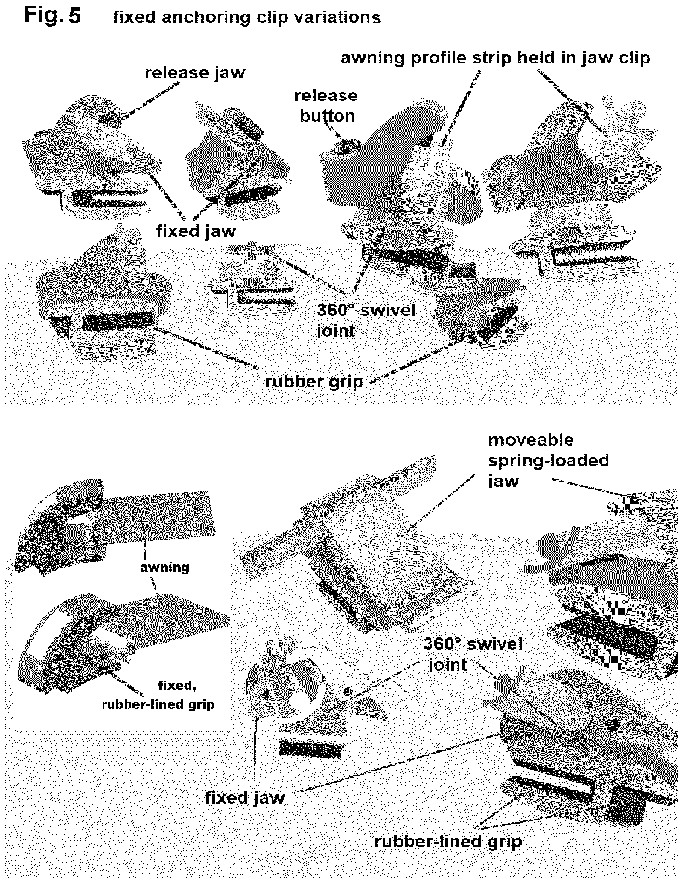

**[****FIG. 5****]** Shows further variations of the permanent anchorage clips (with 360° swivel movement): in this particular case, a spring-loaded 'tooth' set in the fixed-jaw clip allows the awning profile to click-in swiftly; the in-built button releases the spring-loaded tooth, thus freeing the profile strip.

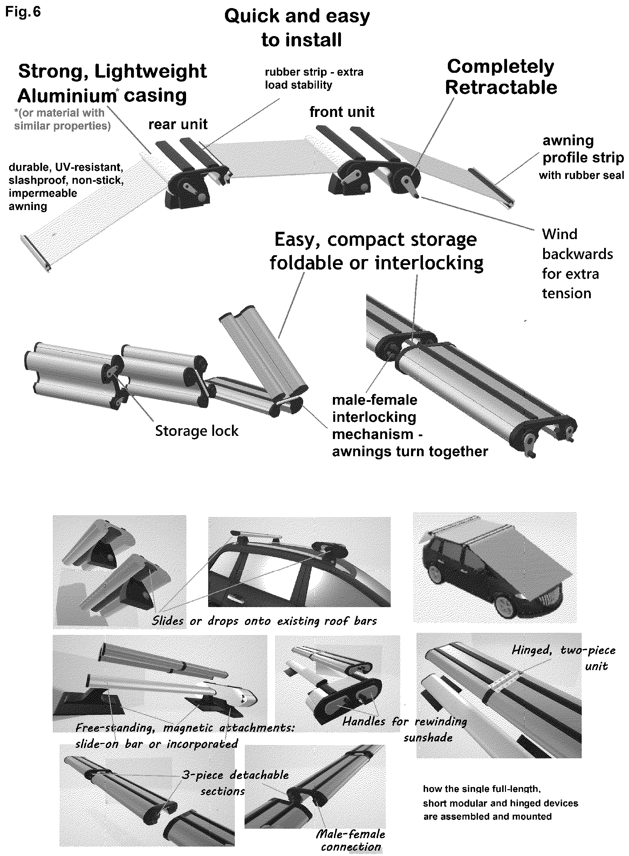

**[****FIG. 6****]** Shows a number of images illustrating main details of the various types of awning device: the full-length, one-piece version, the hinged version; two or three-piece, short modular version with male-female coupling, and how they are mounted onto crossbars.

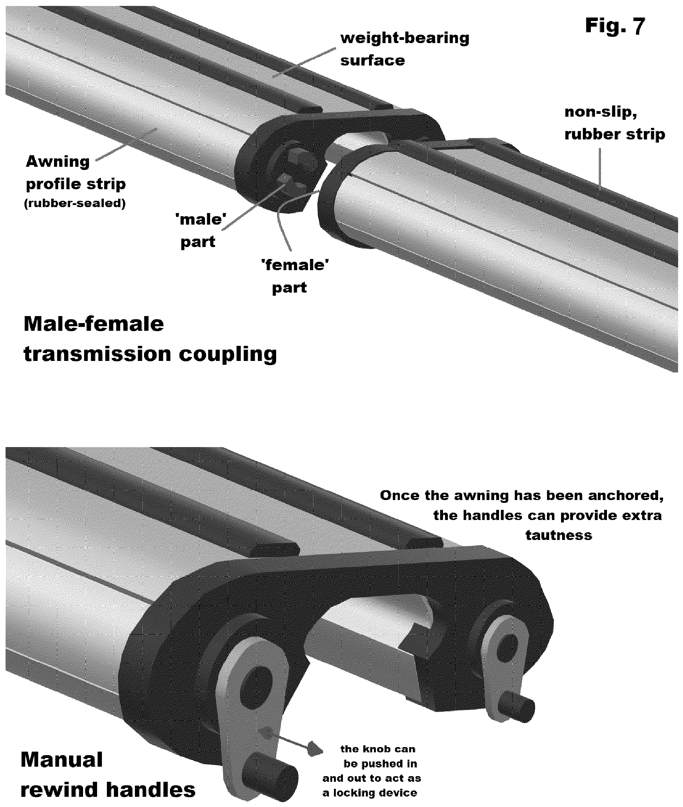

**[****FIG. 7****]** Shows a close-up image of the male-female transmission coupling that allows the separate awnings in the modular devices to act in unison. When aligned on the crossbar, the male-female components slot together snugly;
   It shows a close-up image of the manual rewinding mechanism - there are various options: the handle knobs can either be pressed inwards and be inserted into corresponding holes situated in the casing, thus locking the handles in position, or the handles can be hinged at their base, thus being able swing over and lock into their corresponding holes on the end of the casing unit.

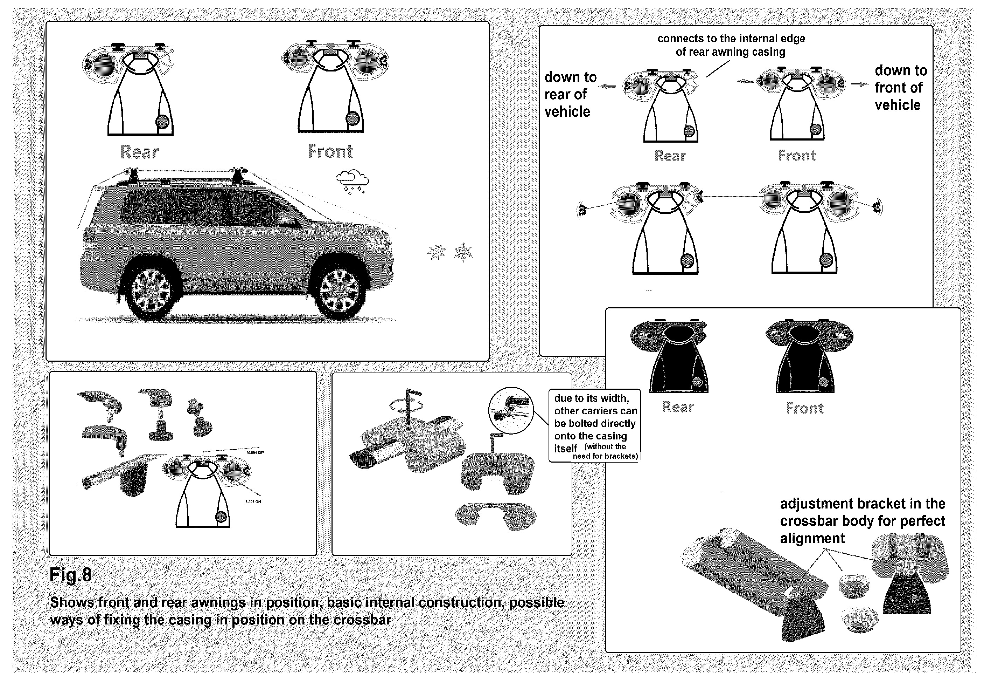

**[****FIG. 8****]** Short, cross-section views of the set of awning housing units - the internal awning (housed on rollers in the front casing awning) and how the awning is drawn out to connect (via the profile strip), snugly into the corresponding housing, in the rear housing unit, where it is held in place with the aid of spring-loaded 'hooks' or 'teeth' to cover the mid-section of the vehicle - the profile strip is then released by means of quick-release buttons incorporated in the housing unit;
   level-adjustment brackets - these are used to align the top, weight-bearing surfaces of the front and rear housing units so as to ensure load stability;
   It also shows the possible means by which the units can secured in place - a cross section of a short section of a unit illustrates how, by turning the hidden screw, downward pressure is exerted on the upper surface of the crossbar, thus creating a tight fit against the rubber-lined shoulders: preventing any movement whatsoever.

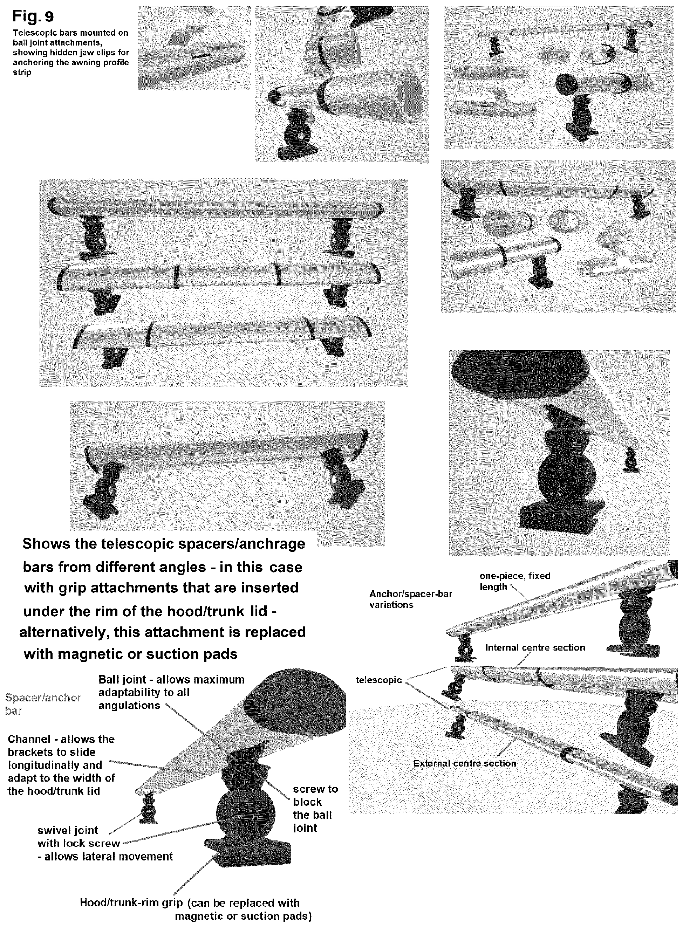

**[****FIG. 9****]** Shows the telescopic spacer/anchorage bars from different angles, with multi-angle attachment brackets: the brackets slide along a track that runs along the underside of the bar (allowing the bar to adapt to various vehicle widths); the fixed-grip base or foot slides onto the hood/trunk lid rim; the flat, circular joint allows the bar to sit at different heights from the vehicle body (tightened using ergonomic screw knobs); and the ball joints allow the brackets to sit at different angles and adapt to the varying angles of the vehicle body (they are tightened and loosened accordingly). The bars can be single,one-length pieces or three-piece telescopic bars;
   Also shown are the telescopic anchorage bars with details of possible incorporated, hidden jaw clips which, when not in use, lie flush and slide into the telescopic casing;
   It shows close up details of the adjustable brackets used to attach the spacer/anchoring bars - the rim grip can be substituted for a magnetic plate or suction pads according to the vehicle type and shape.

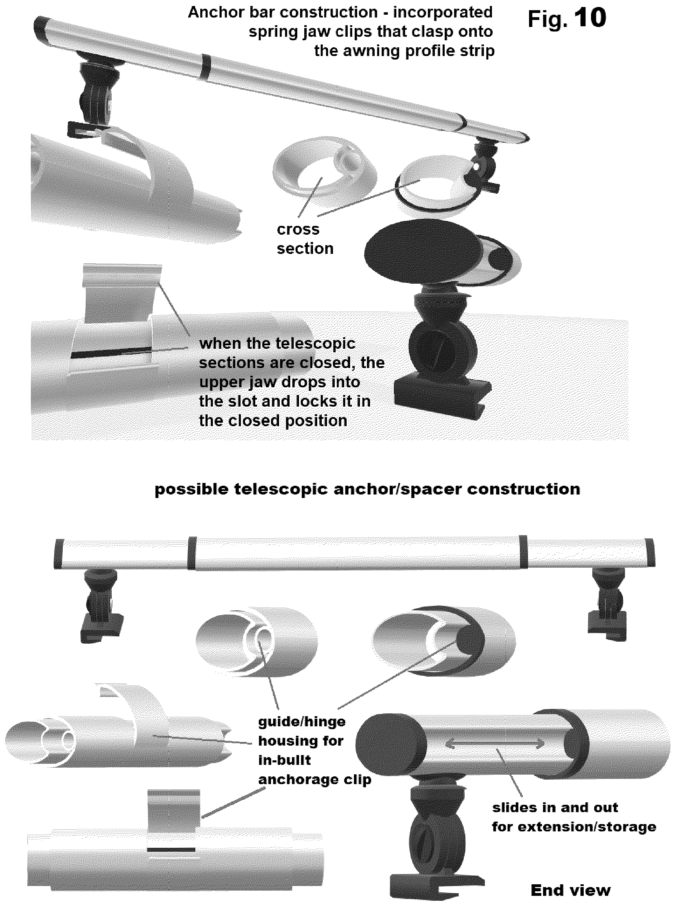

**[****Fig. 10****]** Shows further images of the telescopic anchorage bars with details of possible incorporated, hidden jaw clips which, when not in use, lie flush and slide into the telescopic casing - the two outer sections slide into the middle section, thus modifying the overall length of the bar to fit the vehicle in question

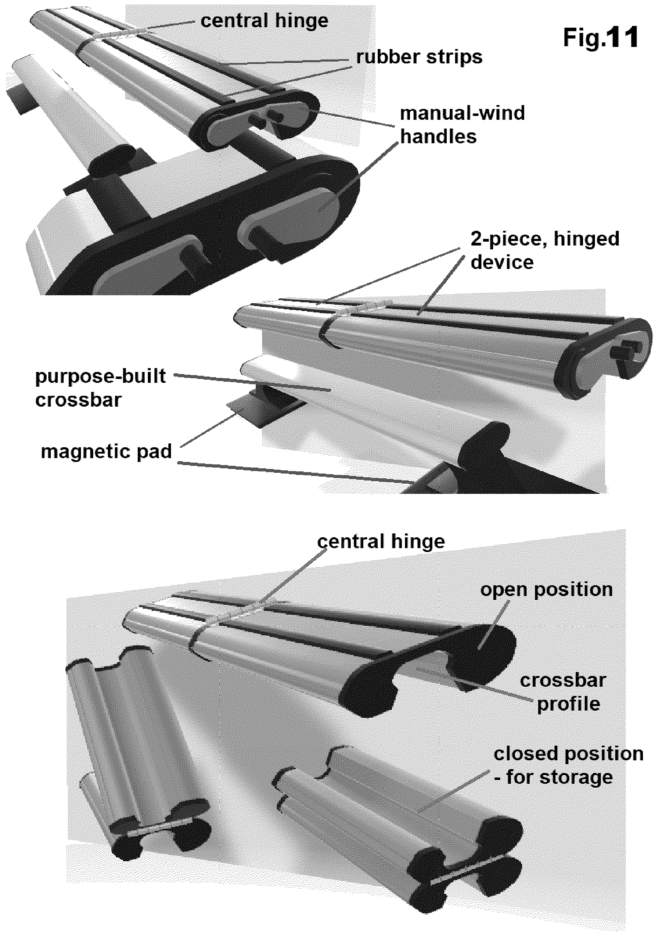

**[****FIG. 11****]** Shows the hinged version in greater detail; how it folds and unfolds + its own purpose-built, magnetic-based crossbar; Also shows how the hinged version; how it folds and unfolds - once in the folded up position, the handles can act as hooks to hold the ends together and prevent them from opening.

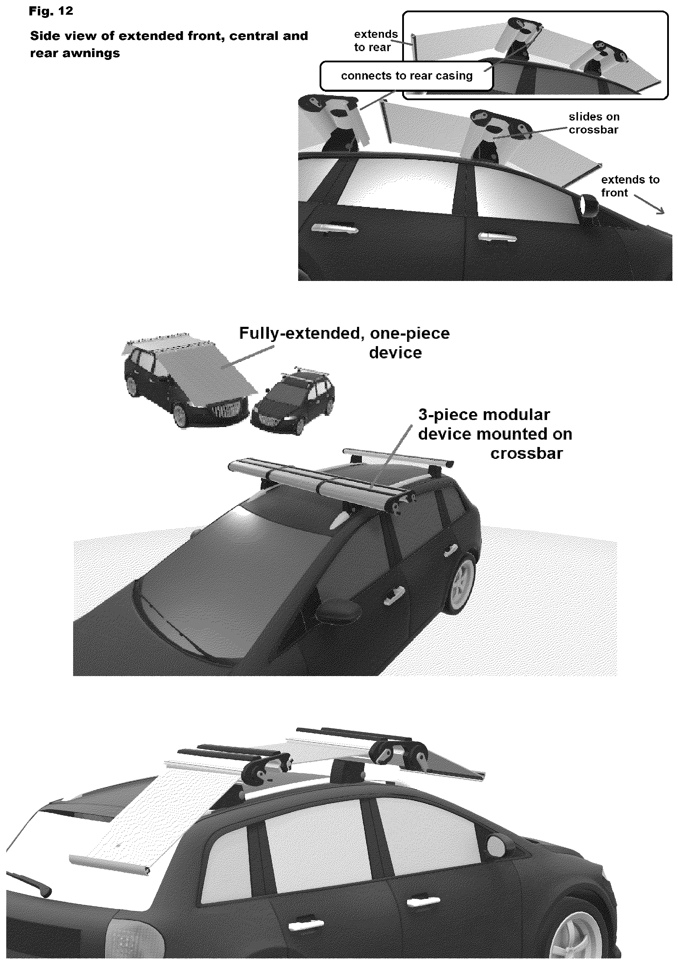

**[****FIG. 12****]** Illustrates both the single, one-piece models and the 3-piece modular version in position on a car roof with various-angle views of a section - illustrating how the devices sit in position; how they connect together.

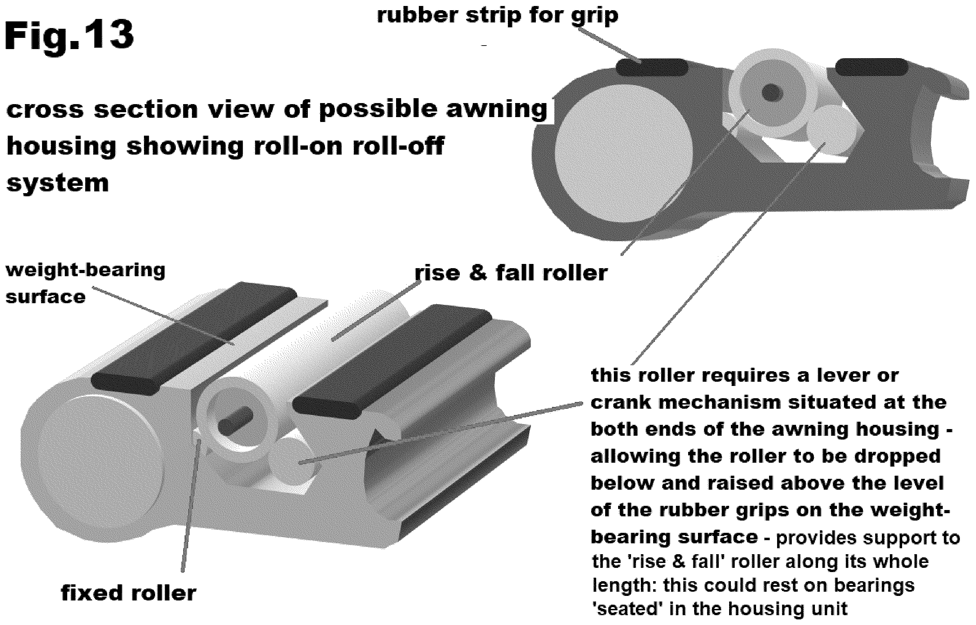

**[****FIG. 13****]** Shows a cross-section of the awning housing (rear, in this case) that reveals a variation of the device with a central, rise-and-fall roller that sits in the upper, weight-bearing part of the casing - this is raised to facilitate loading and dropped to allow the load to rest on the rubber grips. The mechanism to be employed is not limited to the proposed solution in this drawing.

Different features, variations and multiple different embodiments have been shown and described with various details. What has been described in this application at times in terms of specific embodiments is done for illustrative purposes only and without the intent to limit or suggest that what has been conceived is only one particular embodiment or specific embodiments. It is to be understood that this disclosure is not limited to any single specific embodiments or enumerated variations. Many modifications, variations and other embodiments will come to mind of those skilled in the art, and which are intended to be and are in fact covered by this disclosure. It is indeed intended that the scope of this disclosure should be determined by a proper legal interpretation and construction of the disclosure, including equivalents, as understood by those of skill in the art relying upon the complete disclosure present at the time of filing.

## Claims

1. a set of retractable, non-stick, durable, UV-resistant, slash-proof and impermeable awnings/shades mounted on spring-loaded rollers that are housed in theftproof, lightweight, aluminium* casings (*or hardened plastic; or any such material with similar properties).

2. The awnings come in either singular, one-length aluminium* casings that, alone, span the entire width of the vehicle **or** come in shorter, hinged or separate, modular units that are pushed or slotted together - at the ends of each shorter, modular unit is a series of slots fit together via interlocking, male-female features, ensuring that the rollers, while in separate casings, still act in unison - on their own custom-made crossbar) in such a way that their overall length spans the entire width of the vehicle (the internal, lateral edges of the awnings are lined with hooks or hook-and-pile fastening strips, a magnetic material or hoops that allow the awnings to be joined together when extended - and/or to be pulled down laterally and hooked or attached under the wheel arches / to the vehicle body / to permanent or temporary vehicle accessories (via any attachment system/means available on the market, in order to provide extra tautness and stabilty in adverse weather conditions, or to attach side protection accessories).

3. Each awning unit (or set of modular units) has an in-built rewind mechanism located at the outermost end(s) - in the case of the built-in, rechargeable electric-wind feature (to rewind or apply extra tautness) there are directional buttons housed in the casing (larger vehicles like trucks, where the awning casing is out of reach, have a remote control function); the manual model has a flip-over, hide-away, handle that lies flush when not in use and acts as a hook-closure mechanism (in the hinged version) when in the folded, stow-away position. Both of these offer extra tautness, once in position, and assist in rewinding the awnings which are not limited to any one vehicle or any, preinstalled, external accessories the vehicle may have, therefore, the set of awnings and accessories necessary (and the required mounting accessories) are very much dependent on the vehicle in question and its external accessories or features: e.g. a typical set of awnings for off-road or road vehicles is mounted on the roof, or roof accessories of the vehicle (be it any preinstalled, permanent or removable accessory, including bars, roof bars, crossbars, racks, baskets, external frames, gutters, brackets, platforms, fixed points, hooks, straps, adhesives, hook-and-pile straps, magnets, bolts, clips, U-bolts, screws, grips, raised rails, flush rails, tracks, T-tracks snap-on devices, roof boxes, roof platforms, luggage carriers or wind flaps) and consists of an anterior casing containing two awnings mounted on spring-loaded rollers that lie parallel to each other and run the full length of the casing (whether the singular, full-length version or set of shorter units).

4. The front and internal, longitudinal edges reveal a flush, aerodynamic, weather-sealed and vibration-proof, rubber-lined aluminium* profile strip that is attached to the outer edge of the awning. Once open, the front awning is pulled out through the previously-concealed slot and extended just beyond the front of the vehicle or just past the windscreen where it is then anchored to the body of the vehicle - via the profile strip. Similarly, the profile strip that lies along the internal edge of the front unit allows the awning(s) to be pulled backwards and extend over the central section of the vehicle's roof and connect directly to the internal edge of the rear awning casing that lies parallel to the front casing unit. The back edge of the rear unit has another opening, identical to the ones in the front unit, that allows a further awning to extend backwards over the rear of the vehicle - either completely covering the rear end or just enough to cover the rear window. In such a way, this ensures the vehicle is fully or partially covered, as desired. Integrated, adjustable angulation brackets ensure that the upper-most, weight-bearing surfaces of the anterior and posterior units align perfectly with each other, thus offering even support when acting as a roof rack - the upper weight-bearing surface of each unit is lined with rubber strips for extra grip and protection.

5. Clearance between the extended awnings and the body of the vehicle is guaranteed as the above-mentioned devices are mounted on supports (as is any standard roof rack system) and the gap is maintained constant, throughout the length of the vehicle, by means of strategically-placed spacers that consist of telescopic bars that open out to the width of the vehicle and in parallel to the awning casings - as temporary fixtures, these are attached magnetically, via suction pads or attached onto preinstalled, permanent attachments so that their implementation and removal are immediate and complication free. Key positions are where there are sudden, acute changes in the angulation of vehicle's body - namely in proximity of where the front windscreen and rear window meet the vehicle roof.(i.e. in the presence of hailstone or for heat dispersion in the case of intense heat).

6. For full-vehicle protection, the awnings of both the single full-length devices or shorter modular units, are anchored - via their profile strip(s) - at the front and rear of the vehicle, to a set of adjustable, telescopic crossbars (with incorporated fastening devices to which the awning profile strips attach) mounted, via ball-joint brackets, to strong magnetic, or suction, pads that can easily be attached to any part of the vehicle (at any angulation) in order to anchor the external profile strip of the awnings and hold them in position - for partial-vehicle protection (i.e. front and rear windows only), the awnings are anchored in position either to permanent or semi-permanent anchoring clips that are fully or partially mounted onto the rim of the hood, or to a set of removable, telescopic crossbars (with incorporated fastening devices) mounted on ball-jointed brackets, to strong magnetic or suction pads that can be easily be attached (at any angulation) to the hood and trunk.

7. The set of awnings (and their accessories) vary according to the type of vehicle and its preinstalled accessories, however, in the absence of roof accessories, the above-mentioned awning devices are mounted as a stand-alone, independent roof rack system in their own right - the single, full-length version having its own incorporated mounting or roof rack-attachment system most suited to the vehicle in question; the series of the shorter, modular units (or the hinged solution) are slid and locked onto their own purpose-built crossbar which provides rigidity, stability and support. Both solutions are suited to all types of attachment systems - fixed point, magnetic, suction, screw-on, clip-on, strap-on, rail mount, bar mount, gutter mount, track mount, fixed bracket, clamp, bolt, hook on, adhesive tape, glue on, etc. or can attach to, or be adapted to (but not limited to), ANY part of the vehicle itself.

8. In the presence of roof crossbars from other manufacturers, both the single full-length version or the shorter interlocking versions are either slid on laterally or dropped on from above and secured in place: a set of preinstalled, hardened plastic or rubber profile adapter blocks (purchased according to the profile of the crossbar) ensure a tight, secure and vibration-free fit onto ANY profile of existing roof crossbars. These are held in place tightly by means of lockable mounting brackets that lie on the underside of the awning unit(s).

9. In the presence of roof accessories like boxes, platforms, baskets, racks, carriers, etc., that prevent the central awning from being extended across the central section of the roof, a single awning casing is mounted on both the front and rear edges of the above-mentioned roof accessory using the appropriate mounting accessories and, where necessary, a lateral awning is attached to the side of the accessory for use as a sit-under canopy while the vehicle is stationary (e.g. while camping). The lined awning edges (with hooks or hook-and-pile fastening strips, a magnetic material or hoops allow the attachment of hang-down mosquito nets or curtains, for privacy, e.g. for use as a beach changing room or an emergency toilet.

10. The number of mountable, retractable-awning units necessary varies according to the vehicle in question and, where need be, can be connected among themselves in order to ensure that the whole vehicle is offered the necessary protection (or mounted separately, should only part of the vehicle need protecting). This retractable awning system is applicable to an array of vehicles including, but not limited to road, off-road, industrial, motor, electric vehicles or water craft - cars, vans, trucks, pickups, people carriers, buses, motorbikes (both two or three-wheeled versions), quad bikes:

11. In the case of trucks or industrial vehicles, the anterior device (either the singular, full-length version or the shorter modular units), containing two awnings mounted on two spring-loaded rollers, is located on the top of the vehicle in proximity of where the roof meets the windscreen - the front awning(s) is pulled out and extended forwards / downwards, either to cover the entire hood or just the windscreen, and then anchored using the above-mentioned, permanent, semi-permanent or removable anchorage devices; the rear awning is pulled backwards and anchored along the back edge of the cabin;

12. In the case of longer vehicles, like people carriers, campers, minibuses, or even buses, the double-awning, anterior unit is mounted at the front of the vehicle (as described with trucks) and then a series of the rear, single-awning units are placed in parallel to one another along the roof (the number necessary is calculated according to the length of the vehicle). The awnings are extended and connected to each, thus covering the entire roof; the last single-awning unit being placed at the edge of the roof, where it meets the top of the rear window, and pulled down and anchored accordingly.

13. In the case of motorbikes, quad bikes or PWC's (Personal Water Craft, including Jet Ski's), a custom-sized, double-awning unit is attached or adapted to (but not limited to) ANY part of the vehicle or any preinstalled or removable accessories (including bars, handlebars, crossbars, racks, baskets, external frames, fairings, wind screens, mirrors, mudguards, spokes, forks, wheels, suspension systems, shock absorbers, axles, panniers, pannier racks, etc.) via a predetermined (at the time of purchase) attachment system (whether it be magnetic, suction or rely on screws, clips, straps, rails, tracks, brackets, clamps, bolts, hooks, adhesives, grips, snap-on devices, etc.). These attachment systems can either be fully (or partially) removable or permanent in order to facilitate quick, easy and reliable installation and removal, and extra security against theft.
The front awning is extended over the front of the vehicle where it is anchored; the rear awning is extended over the tank, seat and rear pannier or storage area, where it is anchored - the system of anchorage is decided prior to purchase, according to the type and model of vehicle, and the accessories present.

14. In the presence of a windscreen that needs bridging, the awning casing comes fitted with its own set of stems that raise the unit above the windscreen, thus allowing complete, full-length, uninterrupted protection of the vehicle.
Alternatively, a single awning unit is positioned and anchored at the rear of the vehicle (whether to part of the vehicle body itself or to its accessories) using the appropriate mounting system. The awning is then drawn forward, over the seat and fuel tank and anchored either to the handlebars to the front of the vehicle, using the appropriate mounting accessories.

15. In the case of boats (including, but not limited to air-boats, bass boats, cabin boats, centre console boats, cruiser boats, deck boats, dinghy boats, fishing boats, house boats, jet boats, bow-riders, jon boats, motor yacht boats, pontoon boats, ski boats, wake boats and runabouts, etc. this system is mounted onto existing crossbars, frames (whether fixed, fold up, permanent, semi-permanent or temporary) and windshields via the appropriate attachment system - fixed point, magnetic, suction, screw-on, clip-on, strap-on, rail mount, bar mount, gutter mount, track mount, fixed bracket, U-bracket, lock-nut, clamp, bolt, hook on, adhesive tape, glue on, etc. or can attach to, or be adapted to (but not limited to), ANY part of the craft itself.
